Europäisches Patentamt

European Patent Office

Office européen des brevets

(11) Veröffentlichungsnummer: **0 303 764 B1**

# EUROPÄISCHE PATENTSCHRIFT

(45) Veröffentlichungstag der Patentschrift: **09.10.91**

(51) Int. Cl.⁵: **A23K 1/16, A23K 1/18**

(21) Anmeldenummer: **88105680.8**

(22) Anmeldetag: **09.04.88**

Verbunden mit 88903785.9/0378531 (europäische Anmeldenummer/Veröffentlichungsnummer) durch Entscheidung vom 15.10.90.

(54) Geschmacksverbesserung von Hühnereiern.

(30) Priorität: **20.08.87 DE 3727735**

(43) Veröffentlichungstag der Anmeldung:
**22.02.89 Patentblatt  89/08**

(45) Bekanntmachung des Hinweises auf die Patenterteilung:
**09.10.91 Patentblatt  91/41**

(84) Benannte Vertragsstaaten:
**AT BE CH DE ES FR GB GR IT LI NL SE**

(56) Entgegenhaltungen:
DE-A- 1 767 410          FR-A- 2 483.189
GB-A- 14 829             GB-A- 2 118 420
GB-A- 2 119 624          US-A- 2 504 788
US-A- 2 921 853          US-A- 4 128 640
US-A- 4 665 099

CHEMICAL ABSTRACTS, Band 91, Nr. 23, 3. Dezember 1979, Seite 531, Zusammenfassung Nr. 191909q, Columbus, Ohio, US; A.G. KOZMANISHVILI; "New types of raw material for the mixed feed industry", & ZHIVOTNOVODSTVO 1979, (9), 40-1

(73) Patentinhaber: **Henkel Kommanditgesellschaft auf Aktien
Postfach 1100 Henkelstrasse 67
W-4000 Düsseldorf-Holthausen(DE)**

(72) Erfinder: **Lauermann, Georg, Dr.
Liliencronweg 48
W-2360 Bad Segeberg(DE)**
Erfinder: **Thobe, Clemens
Fritz-Reuter-Strasse 36
W-2203 Horst(DE)**

COMMONWEALTH AGRICULTURAL BUREAU, Zusammenfassung Nr. 76989311, 1n046-00752, Nutrition Abs. and Rev.; A.G. KOZMANISHVILI: "New raw materials for the production of feeds", & ZHIVOTNO-VODSTVO, Nr. 12, 1974, Seiten 45-47

COMMONWEALTH AGRICULTURAL BUREAU, Zusammenfassung Nr. 8542631, 0n054-04652, Nutrition Abs. and Rev./Ser. B.; G. NICHITA et al.: "Extracted seeds of fennel (Foeniculum vulgare) in animal feeding", & LUCRARI STI-INTIFICE, INSTITUTUL AGRONOMIC TIMISOA-RA, ZOOTEHNIE, Band 18, 1981, Seiten 60-67

TIERISCHE LEBENSMIT-TEL,"Eier,Fleisch,Fisch,Buttermilch".W.RAU-CH:EIER S.886-893,Springer-Verlag 1968

**Beschreibung**

Die Erfindung betrifft ein Verfahren zur Verbesserung des Geschmacks von Hühnereiern sowie die Verwendung etherischer Öle in Mischfuttern, Futtermitteln und/oder Trinkwasser zur Verbesserung des Gechmacks von Hühnereiern.

Der überwiegende Teil der heute zum Verkauf angebotenen, Hühnereier stammt von Hühnern aus Batterie- oder Bodenhaltung. An diese Hühner werden nach neuesten Tierernährunggesichtspunkten zusammengesetzte Mischfutter und/oder Futtermitte verfüttert, die den hohen Ansprüchen des Erhaltungsbedarfes und der Legeleistung der Hennen gerecht werden. Im folgenden werden unter "Mischfutter" die nach den Richtlinien des deutschen Futtermittelgesetzes zusammengesetzten Mischungen verstanden; alle übrigen Mischungen werden als "Futtermittel" bezeichnet.

Mischfutter und Futtermittel für Legehennen sind häufig sehr einseitig ausgerichtet, da sie nur die Eibildung, nicht dagegen den Eigeschmack berücksichtigen. Die Eier von Hühnern, die mit solchen Mischfuttern und/oder Futtermitteln gefüttert werden, schmecken daher fade, d. h. ihnen fehlt der charakteristische Eigeschmack.

Es ist bekannt, Futtermischungen für Schweine mit Aromastoffen, wie Vanille, Saccharin oder Natriumglutamat zu versetzen (siehe z.B. in Ullmanns Encyclopädie der technischen Chemie 12, 47 (1976)). Diese Zusätze bewirken eine verbesserte Futteraufnahme der Tiere.

Aus US 4 665 099 ist bekannt, daß polyterpenhaltige Futtermittel, die an Tiere und insbesondere an Geflügel verfüttert werden, zur Unterdrückung der Fettbildung führen. Die Polyterpene werden aus Monoterpenen, die in etherischen Ölen, wie Citrusöl und Kampferöl, enthalten sind, gewonnen, indem etherische Öle als solche in Gegenwart von Säuren oder die aus etherischen Ölen isolierten Monoterpene, beispielsweise in Gegenwart von Katalysatoren, polymerisiert werden.

In "Der Apothekerpraktikant", 77 (1950) werden aromatische Wässer, beispielsweise Rosenwasser, Zimtwasser oder Fenchelwasser beschrieben, die durch Lösen der entsprechenden Öle in Wasser bei 35 bis 40 °C bereitet werden. Spezielle Verwendungsmöglichkeiten dieser Wässer werden nicht genannt.

Des weiteren ist bekannt, daß die Verfütterung von Fischmehl, gossypolhaltigem Baumwollsaatextraktionsschrot oder größerer Mengen an Rapsextraktionsschrot negative Geruchs- und Geschmacksveränderungen in Hühnereiern verursacht (siehe beispielsweise in C. Gebhardt "Tierernährung", VEB Deutscher Landwirtschaftsverlag Berlin (1981)).

Die Beeinflussung der Dotterfarbe und des Cholestaingehaltes von Hühnereiern durch Futtermittel ist aus "Tierische Lebensmittel : Eier, Fleich, Fisch, Buttermilch, Springerverlag 1968 bekannt.

Demgegenüber ist die der Erfindung zugrunde liegende Aufgabe auf die Geschmacksverbesserung von Hühnereiern gerichtet.

Überraschenderweise wurde gefunden, daß Hühnereier einen argenehm würzigen Geschmack besitzen, wenn an die Legehennen Trinkwasser, Mischfutter und/oder Futtermittel, denen etherische Öle zugesetzt wurden, verfüttert werden.

Gegenstand der Erfindung ist daher ein Verfahren zur Verbesserung des Geschmackes von Hühnereiern, das dadurch gekennzeichnet ist, daß man Mischfutter und/oder Futtermittel für Legehennen auf Basis verschiedener Getreidearten, die als weitere Bestandteile Getreidenebenprodukte, Sojaschrot und andere Eiweißkomponenten pflanzlichen und/oder tierischen Ursprungs, Futterfette pflanzlichen und/oder tierischen Ursprungs, Mineralstoffe, Spurenelemente und/oder Vitamine enthalten können, mit 10 bis 6000 ppm etherischer Öle und/oder Trinkwasser mit 1 - 70000 ppm etherischer Öle mischt und anschließend an Legehennen verfuttert.

Zu Getreidenebenprodukten zählen beispielsweise Kleien, Nachmehle, Tapioka- und Maniokamehl, Luzernegrünmehl und Grasmehl.

Des weiteren ist die Verwendung von Mischfuttern und/oder Futtermitteln für Legehennen auf Basis verschiedener Getreidearten, die 10 - 6000 ppm etherische Öle und als fakultative Bestandteile Getreidenebenprodukte, Sojaschrot und andere Eiweißkomponenten pflanzlichen und/oder tierischen Ursprungs, Futterfette pflanzlichen und/oder tierischen Ursprungs, Mineralstoffe, Spurenelemente und/oder Vitamine enthalten, und/oder Trinkwasser für Legehennen, das 1 - 70000 ppm etherische Öle enthält, zur Verbesserung des Geschmacks von Hühnereiern Gegenstand der Erfindung.

Vorzugsweise enthalten die erfindungsgemäßen Mischfutter und/oder Futtermittel 10 bis 2000 ppm etherische Öle.

Unter dem Begriff "etherische Öle" werden in Pflanzen, insbesondere in Blüten, Samen, Früchten, Fruchtschalen, Blättern und/oder Stengeln enthaltene, komplex zusammengesetzte Riech- und Aromastoffe, naturidentische und/oder künstliche Riech- und Aromastoffe, gewünschtenfalls in Kombination mit an sich bekannten Aromastoffen für Mischfutter und/oder Futtermittel, beispielsweise Vanille, verstanden, die Hühnereiern angenehme Geschmacks- und Geruchseigenschaften verleihen.

Naturidentische Riech- und Aromastoffe werden synthetisch hergestellt und sind mit natürlichen Riech- und Aromastoffen chemisch identisch. Künstliche Riech- und Aromastoffe, die ebenfalls synthetisch hergestellt werden, unterscheiden sich in ihren chemischen Strukturen von natürlichen Riech- und Aromastoffen, verleihen jedoch Hühnereiern Geschmacks- und Geruchseigenschaften, die der mit Hilfe natürlicher und/oder naturidentischer Riech-und Aromastoffe erzielten Geschmacksverbesserung von Hühnereiern entspricht.

Etherische Öle mit einer Geruchs- und Aromacharakteristik von Löwenzahn, Salbei, Kamille, Lavendel, Fenchel, Kampfer, Thymian, Liebstöckel, Rosmarin, Estragon, Basilikum, Kerbel und/oder Bohnenkraut werden als Zusätze für Trinkwasser, Mischfutter und/oder Futtermittel bevorzugt. Besonders bevorzugt werden etherische Öle mit einer Geruchs- und Aromacharakteristik von Thymian, Basilikum, Salbei, Kamille, Lavendel, Kampfer, Rosmarin, Estragon und/oder Kerbel.

Riech- und Aromastoffe natürlichen Ursprungs, die Hühnereiern angenehme Geschmacks- und Geruchseigenschaften verleihen, können Trinkwasser, Mischfuttern und/oder Futtermitteln für Legehennen in Form getrockneter Pflanzen, gewünschtenfalls in Kombination mit naturidentischen und/oder künstlichen Riech- und Aromastoffen und/oder an sich bekannten Aromastoffen für Mischfutter und/oder Futtermittel, zugesetzt werden, d.h. direkt mit denselben vermischt werden. Im Rahmen der Erfindung ist es jedoch auch möglich, natürliche Riech- und Aromastoffe als solche zu verwenden, das heißt, Riech- und Aromastoffe mit Hilfe bekannter physikalischer Methoden, beispielsweise mechanischer Abtrenn-, Extraktions- und/oder Destillationsverfahren aus den entsprechenden Pflanzenteilen zu isolieren (Ullmanns Enzyklopädie der Chemie, 4. Auflage, Band 20, Seite 252 (1981)), gewünschtenfalls mit naturidentischen und/oder künstlichen Riech- und Aromastoffen zu vermischen, gewünschtenfalls auf Trägermaterialien, beispielsweise pflanzliche und/oder tierische Fette, pulverförmige Trägersubstanzen, wie Bolus alba, kohlen- und phosphorsauren Kalk, Boll- und/oder Nachmehle, Kleien, Fließ- und/oder Preßhilfsmittel, aufzubringen, gewünschtenfalls mit an sich für Mischfutter und/oder Futtermittel bekannten Aromastoffen, beispielsweise Vanille, abzumischen und anschließend mit Trinkwasser, Mischfuttern und/oder Futtermitteln für Legehennen zu vermischen.

BEISPIELE

Vier im Käfig gehaltene Legehennen (Versuchstiere) wurden mit einem handelsüblichen Mischfutter, das sich aus 16 Gewichtsprozent Weizen, 17 Gewichtsprozent Maismehl, 12 Gewichtsprozent Maiskleberfutter, 3 Gewichtsprozent Maisfuttermehl, 2,5 Gewichtsprozent Maiskleber, 14 Gewichtsprozent extrahiertem Sojaschrot, 18 Gewichtsprozent Maniokamehl, 8,08 Gewichtsprozent Calciumcarbonat, 3 Gewichtsprozent Tiermehl, 2,5 Gewichtsprozent Sojaöl, 1,5 Gewichtsprozent Weizengrießkleie, 1,5 Gewichtsprozent Melasse, 0,6 Gewichtsprozent Spurenelement-Vitamin-Vormischung, 0,3 Gewichtsprozent Calcium/Natrium-Phosphat und 0,02 Gewichtsprozent dl-Methionin (Zusatzstoffe je kg: 12.000 i.E. Vitamin A, 2.500 i.E. Vitamin $D_3$, 10 mg Vitamin E, Fettstabilisator (BHT), Canthaxanthin; Inhaltstoffe: 16 Gewichtsprozent Rohprotein, 0,32 Gewichtsprozent Methionin, 4,5 Gewichtsprozent Rohfett, 13 Gewichtsprozent Rohasche, 3,5 Gewichtsprozent Calcium, 0,5 Gewichtsprozent Phosphor, 0,15 Gewichtsprozent Natrium; Energiezahl Geflügel = 72) zusammensetzte und dem 800 ppm einer Mischung etherischer Öle zugesetzt wurden, gefüttert. Die Mischung der etherischen Öle bestand aus gleichen Gewichtsteilen von in Salbei, Rosmarin, Thymian, Lavendel und Kampfer enthaltenen natürlichen Riech-und Aromastoffen. Die mit Hilfe physikalischer Methoden isolierten Riech- und Aromastoffe wurden auf Rübmehl (Gewichtsverhältnis Rüböl zu etherischem Öl = 9:1) aufgebracht und in dieser Form dem handelsüblichen Mischfutter zugemischt.

Vier andere, ebenfalls im Käfig gehaltene Legehennen (Kontrolltiere) wurden mit dem gleichen handelsüblichen Mischfutter, jedoch ohne Zusatz etherischer Öle, gefüttert.

Die Futteraufnahme durch die Tiere war in keinem Fall gestört.

Nach Beginn der Fütterung wurden an den nächsten 14 Tagen die Eier gesammelt, zum organoleptischen Test 4 Minuten gekocht und an 25 Personen zur Verkostung und Beurteilung verteilt. Den Testessern war nicht bekannt, ob die Eier von den Versuchs-oder Kontrolltieren stammten.

Alle Testesser beurteilten den Geschmack der Eier, die von den Versuchstieren stammten, als angenehm, würzig und vollmundig, während der Geschmack der Eier, die von den Kontrolltieren stammten, als fade bezeichnet wurde.

**Patentansprüche**

1. Verfahren zur Verbesserung des Geschmackes von Hühnereiern, dadurch gekennzeichnet, daß man Mischfutter und/oder Futtermittel für Legehennen auf Basis verschiedener Getreidearten, die als weitere Bestandteile Getreidenebenprodukte, Sojaschrot und andere Eiweißkomponenten pflanzlichen und/oder tierischen Ursprungs, Futterfette pflanzlichen und/oder tierischen Ursprungs, Mineralstoffe, Spurenelemente und/oder Vitamine enthalten können, mit 10 - 6000 ppm etherischer Öle und/oder Trinkwasser für Legehennen mit 1 - 70000 ppm etherische Öle mischt und anschließend an Legehennen verfüttert.

2. Verfahren nach Anspruch 1, dadurch gekennzeichnet, daß Mischfutter und/oder Futtermittel für Legehennen mit 10 - 2000 ppm etherischer Öle gemischt werden.

3. Verfahren nach einem oder beiden der Ansprüche 1 bis 2, dadurch gekennzeichnet, daß Mischfutter, Futtermittel und/oder Trinkwasser für Legehennen mit etherischen Ölen mit einer Geruchs- und Aromacharakteristik von Löwenzahn, Salbei, Kamille, Lavendel, Kampfer, Thymian, Liebstöckel, Rosmarin, Estragon, Kerbel, Bohnenkraut und/oder Basilikum gemischt werden.

4. Verwendung von Mischfuttern und/oder Futtermitteln für Legehennen auf Basis verschiedener Getreidearten, die 10 - 6000 ppm etherische Öle und als fakultative Bestandteile Getreidenebenprodukte, Sojaschrot und andere Eiweißkomponenten pflanzlichen und/oder tierischen Ursprungs, Futterfette pflanzlichen und/oder tierischen Ursprungs, Mineralstoffe, Spurenelemente und/oder Vitamine enthalten, und/oder Trinkwasser für Legehennen, das 1 - 70000 ppm etherische Öle enthält, zur Verbesserung des Geschmackes von Hühnereiern.

5. Verwendung nach Anspruch 4, dadurch gekennzeichnet, daß Mischfutter und/oder Futtermittel für Legehennen, die 10 - 2000 ppm etherische Öle enthalten, verwendet werden.

6. Verwendung nach einem oder beiden der Ansprüche 4 und 5, dadurch gekennzeichnet, daß Mischfutter, Futtermittel und/oder Trinkwasser für Legehennen, die etherische Öle mit einer Geruchs- und Aromacharakteristik von Löwenzahn, Salbei, Kamille, Lavendel, Kampfer, Thymian, Liebstöckel, Rosmarin, Estragon, Kerbel, Bohnenkraut und/oder Basilikum enthalten, verwendet werden.

## Claims

1. A process for improving the taste of hens' eggs, characterized in that mixed feeds and/or fodders for laying hens based on various types of cereals, which may contain as further constituents cereal by-products, soybean waste and other protein components of vegetable and/or animal origin, fodder fats of vegetable and/or animal origin, minerals, trace elements and/or vitamins, are mixed with 10 to 6,000 ppm essential oils and/or drinking water for laying hens is mixed with 1 to 70,000 ppm essential oils and then fed to laying hens.

2. A process as claimed in claim 1, characterized in that the mixed feeds and/or fodders for laying hens are mixed with 10 to 2,000 ppm essential oils.

3. A process as claimed in one or both of claims 1 and 2, characterized in that mixed feeds, fodders and/or drinking water for laying hens are mixed with essential oils having the odour and aroma characteristic of dandelion, sage, camomile, lavender, camphor, thyme, lovage, rosemary, tarragon, chervil, savory and/or basil.

4. The use of mixed feeds and/or fodders for laying hens based on various types of cereals, which contain 10 to 6,000 ppm essential oils and, as optional constituents, cereal by-products, soybean waste and other protein components of vegetable and/or animal origin, fodder fats of vegetable and/or animal origin, minerals, trace elements and/or vitamins, and/or drinking water for laying hens containing 1 to 70,000 ppm essential oils for improving the taste of hens' eggs.

5. The use claimed in claim 4, characterized in that mixed feeds and/or fodders for laying hens containing 10 to 2,000 ppm essential oils are used.

6. The use claimed in one or both of claims 4 and 5, characterized in that mixed feeds, fodders and/or drinking water for laying hens containing essential oils having the odour and aroma characteristic of dandelion, sage, camomile, lavender, camphor, thyme, lovage, rosemary, tarragon, chervil, savory and/or basil are used.

## Revendications

1. Procédé pour améliorer le goût des oeufs de poule caractérisé en ce que le mélange de graines et/ou d'aliment pour poules pondeuses à base de différentes sortes de céréales qui peut renfermer comme autres constituants des sous-produits de céréales, des déchets de soja, et d'autres composants protéiques d'origine végétale et/ou animale, des graisses alimentaires d'origine végétale et/ou animale, des substances minérales, des oligo-éléments et/ou des vitamines est mélangé avec 10 à 6000 ppm d'une huile à base d'éther et/ou de l'eau de boisson pour poules pondeuses avec 1 à 70000 ppm d huile à base d'éther et ensuite qu'on le donne à manger aux poules pondeuses.

2. Procédé selon la revendication 1 caractérisée en ce que le mélange de graines et/ou d'aliment pour poules pondeuses est mélangé avec 10 à 2000 ppm d'une huile à base d'éther.

3. Procédé selon l'une ou les deux revendications 1 et 2, caractérisée en ce que le mélange de graines, d'aliment et/ou d'eau de boisson pour poules pondeuses est mélangé avec des huiles à base d'éther ayant une caractéristique d'arome ou de senteur de pissenlit, de sauge, de camomille, de lavande, de camphre, de thym, de liveche, de romarin, d'estragon, de cerfeuil, de sarriette et/ou de basilic.

4. Utilisation de mélanges de graines et/ou d'aliments pour poules pondeuses à base de différentes sortes de céréales, renfermant de 10 à 6000 ppm d'huile à base d'éther et, en tant que constituant facultatif, des sous-produits céréaliers, de déchets de soja, et d'autres constituants proteiques d'origine végétale et/ou animale, des substances minérales, des oligoéléments, et/ou des vitamines et/ou de l'eau de boisson pour poules pondeuses qui renferme de 1 à 70.000 ppm d'huile à base d'éther, en vue d'améliorer le goût des oeufs de poule.

5. Utilisation selon la revendication 4 caractérisée en ce que l'on utilise un mélange de graines et/ou d'un aliment pour poules pondeuses qui renferme de 10 à 2000 ppm, d'huile à base d'éther.

6. Utilisation selon l'une ou les deux revendications 4 et 5 caractérisée en ce que le mélange de graines, d'aliment et/ou d'eau de boisson pour poules pondeuses qui contient d'huile à base d'éther ayant une caractéristique d'arome ou de senteur de pissenlit, de sauge, de camomille, de lavande, de camphre, de thym, de livèche, de romarin, d'estragon, de cerfeuil, de sarriette et/ou de basilic, sont utilisés.